# DEMANDE DE BREVET EUROPEEN

(11) **EP 4 670 506 A1**
(43) Date de publication de la demande: **31.12.2025**
(21) Numéro de dépôt: 24306040.7
(22) Date de dépôt: 28.06.2024
(51) Int. Cl.: A01N 63/12, A01N 25/28, A01P 7/04

(54) **PROCÉDÉ D'ENCAPSULATION DE NÉMATODES ENTOMOPATHOGÈNES PAR ÉLECTROPULVÉRISATION**

(71) Demandeur: Centre National de la Recherche Scientifique, 75016 Paris (FR); UNIVERSITE DE MONTPELLIER, 34090 Montpellier (FR); Ecole Nationale Supérieure de Chimie de Montpellier, 34090 Montpellier (FR); Institut de Recherche pour le Développement (IRD), 13002 Marseille 2 (FR); Institut National de la Recherche pour l'Agriculture, l'Alimentation et l'Environnement, 75007 Paris (FR)
(72) Inventeur: OGIER, Jean Claude, 34980 SAINT GELY DU FESC (FR); PAGES, Sylvie, 34980 SAINT CLEMENT DE RIVIERE (FR); CHANDRE, Fabrice, 34980 MONTFERRIER SUR LEZ (FR); ROSSIGNOL, Marie, 30250 AUBAIS (FR); PERRIN, Aurélie, 30820 CAVEIRAC (FR); CAMBEDOUZOU, Julien, 34980 Saint-Clément-de-Rivière (FR); CORNU, David, 34980 SAINT GELY DU FESC (FR)
(74) Mandataire: Plasseraud IP

(57) **Abrégé**

La présente divulgation relève du domaine des nématodes entomopathogènes (NEPs). En particulier, la présente divulgation concerne un procédé d'encapsulation de nématodes entomopathogènes par électropulvérisation.

## Description

### Domaine technique

La présente divulgation relève du domaine des nématodes entomopathogènes (NEPs). En particulier, la présente divulgation concerne un procédé d'encapsulation de nématodes entomopathogènes par électropulvérisation.

### Technique antérieure

Les nématodes entomopathogènes (NEPs) sont des micro-organismes parasitoïdes du sol dont les larves libres sont en recherche active d'une larve d'insecte qu'ils vont infester. Ils sont associés à des bactéries symbiotiques, qui, une fois la pénétration dans l'hôte réalisée, vont se multiplier, provoquant la mort de l'hôte par septicémie en moins de 48h. Les NEPs infestent une très large gamme d'insectes et quelques autres arthropodes mais ne sont pas pathogènes pour les mammifères, dont l'homme, et les végétaux.

Bien que les nématodes parasites d'insectes soient connus depuis longtemps, leur utilisation pour la lutte biologique en protection des cultures est assez récente et reste limitée à un usage terrestre. Ils peuvent ainsi être facilement élevés et sont formulables sous forme de bioinsecticides. Cependant, leur courte durée de stockage et leur stabilité limitée, liée à une dégradabilité rapide au contact du milieu environnant, représentent des limitations majeures à leur commercialisation.

L'encapsulation des NEPs a été explorée dès les années 1980, permettant d'assurer une certaine résistance à l'environnement néfaste auquel ils sont confrontés. L'encapsulation de nématodes est par exemple décrite dans la demande WO2016/176764A1. Cependant, le procédé décrit dans cette demande ne permet pas de contrôler la taille des microsphères obtenues.

### Résumé

La présente divulgation propose d'encapsuler les nématodes entomopathogènes par électropulvérisation en projetant une suspension aqueuse comprenant (a) au moins un alginate et (b) des nématodes entomopathogènes dans une solution de réticulation.

La présente divulgation porte ainsi sur un procédé d'encapsulation de nématodes entomopathogènes par électropulvérisation comprenant une étape de projection d'une suspension aqueuse assistée d'un champ électrique dans une solution de réticulation, la suspension aqueuse comprenant (a) au moins un alginate et (b) des nématodes entomopathogènes.

A la surprise des inventeurs, les nématodes entomopathogènes (NEPs) et les bactéries symbiotiques associées survivent aux conditions d'électropulvérisation et les microsphères obtenues contenant ces NEPs peuvent être utilisées dans des applications de biocontrôle. Ce procédé d'encapsulation permet d'encapsuler les nématodes efficacement et de contrôler la taille des microsphères obtenues, il est notamment possible d'obtenir des microsphères ayant une taille comprise entre 150 à 1000 µm, soit une taille plus faible que les microsphères obtenues avec les autres méthodes. Ce procédé permet également d'obtenir des microsphères ayant une bonne homogénéité en termes de taille et de contenu nématodes. Sans vouloir être liés par cette théorie, les inventeurs supposent que le fait d'avoir des microsphères de faible taille permet aux larves de ravageurs de les consommer plus facilement, ce qui conduit à une meilleure efficacité des microsphères obtenues par le procédé de la présente divulgation.

La présente divulgation porte également sur des microsphères d'alginate comprenant des nématodes entomopathogènes susceptibles d'être obtenues par le procédé décrit dans la présente divulgation.

La présente divulgation porte également sur des microsphères d'alginate comprenant des nématodes entomopathogènes ayant une taille comprise entre 150 et 1000 µm, de préférence entre 200 à 900 µm, et préférentiellement entre 250 et 800 µm.

La présente divulgation porte également sur l'utilisation de microsphères d'alginate en biocontrôle, de préférence sur le taupin, le moustique tigre, et/ou le carpocapse du pommier.

### Brève description des dessins

D'autres caractéristiques, détails et avantages apparaîtront à la lecture de la description détaillée ci-après, et à l'analyse des dessins annexés, sur lesquels :
Fig. 1

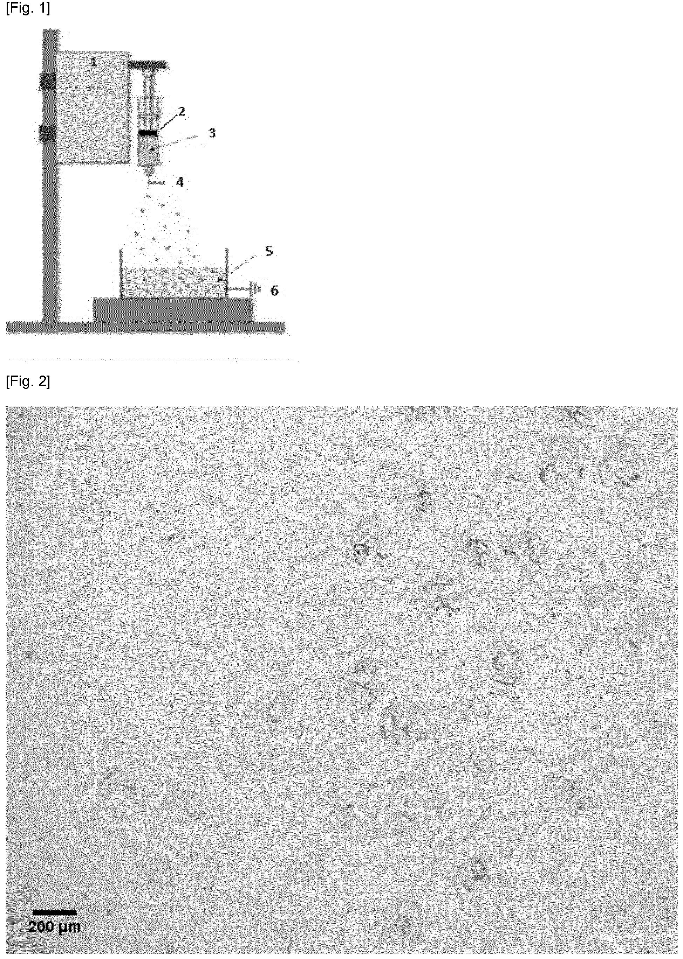

   [Fig. 1] montre un dispositif d'électropulvérisation permettant de mettre en oeuvre le procédé.
Fig. 2
   [Fig. 2] montre les microsphères obtenues selon le procédé de la présente divulgation.

### Description détaillée

La présente divulgation porte ainsi sur un procédé d'encapsulation de nématodes entomopathogènes par électropulvérisation comprenant une étape de projection d'une suspension aqueuse assistée d'un champ électrique dans une solution de réticulation, la suspension aqueuse comprenant (a) au moins un alginate et (b) des nématodes entomopathogènes (NEPs).

L'électropulvérisation (electrospray en anglais) est une technique bien connue où une suspension est projetée dans un champ électrique ce qui permet d'atomiser la suspension en microgouttes. Un dispositif permettant de mettre en oeuvre la présente méthode est montré en Figure 1. Le dispositif d'électropulvérisation (1) comprend une seringue (2) contenant la suspension aqueuse comprenant (a) au moins un alginate et (b) des nématodes entomopathogènes (3). Cette suspension est ensuite projetée, avec un champ électrique produit par un générateur de haute tension (4), dans une cuve (5) qui contient la solution de réticulation, la cuve étant reliée à une électrode (6). Au contact de la solution de réticulation, l'alginate réticule et des microsphères comprenant des nématodes entomopathogènes sont formées. Les microsphères peuvent être récupérées par filtration. Le dispositif d'électropulvérisation pouvant être mis en oeuvre dans la présente divulgation peut être n'importe quel dispositif couramment utilisé.

La tension du champ électrique appliqué peut être comprise entre 1 et 30 kV, par exemple entre 5 et 26kV. Le débit de la suspension projetée peut être compris entre 0,1 et 30 mL/h, par exemple entre 0,5 et 24 mL/h ou entre 1 et 15 mL/h. La distance entre la seringue (3) et la cuve (5) peut par exemple être comprise entre 10 et 30cm. L'homme du métier saura adapter ces paramètres en fonction du résultat recherché.

Selon un mode de réalisation, l'alginate (a) comprend de l'alginate de sodium. Ainsi, l'alginate (a) est l'alginate de sodium, ou un mélange comprenant de l'alginate de sodium et un autre alginate, par exemple l'alginate de calcium.

La concentration en (a) alginate dans la suspension aqueuse peut être comprise entre 0,1 à 5% en poids par rapport au poids total de la suspension aqueuse, et plus préférentiellement entre 0,5 et 3%.

Tout type de nématodes entomopathogènes peut être encapsulé. Il peut par exemple s'agir de nématodes choisis parmi les Heterorhabditis, Steinernema, Phasmarhabditis, et leurs mélanges. L'espèce de nématodes entomopathogènes encapsulée peut par exemple être sélectionnée dans le groupe constitué par : Steinernema boemarei, Steinernema feltiae, Steinernema glaseri, Steinernema kraussei, Steinernema carpocapsae, Steinernema scapterisci, Steinernema riobrave, Steinernema adamsi, Steinernema glaseri, Steinernema boemarei, Heterorhabditis bacteriophora, Heterorhabditis megidis, Heterorhabditis indica, Heterorhabditis heliothidis, Heterorhabiditis downesi Heterorhabditis marelatus, Phasmarhabditis hermaphrodita, Phasmarhabditis neopapillosa, Phasmarhabditis californica et leurs mélanges.

Les nématodes entomopathogènes sont de préférence au stade juvénile infectieux. Ils peuvent être obtenus commercialement sous forme sèche ou peuvent être produits selon des méthodes connues dans l'art. Par exemple, les nématodes peuvent être produits in vivo en infectant les insectes hôtes, par exemple les larves de Galleria mellonella, avec des juvéniles infectieux de nématodes entomopathogènes, puis en collectant les nématodes élevés, par exemple en suspendant la carcasse de l'insecte dans l'eau et en obtenant une suspension aqueuse de nématodes. Les nématodes peuvent également être produits à l'aide d'un piège de White. D'autres méthodes connues comprennent la production in vitro à l'aide d'une culture solide ou par fermentation.

La concentration en nématodes entomopathogènes dans la suspension aqueuse peut être comprise entre 100 et 30000 NEPs/mL (nématodes entomopathogènes par mL de suspension), de préférence entre 200 et 25000 NEPs/mL, entre 500 et 20000 NEPs/mL ou entre 1000 et 18000 NEPs/mL.

Selon un mode de réalisation, la solution de réticulation comprend au moins un sel de cation multivalent. Le cation multivalent peut être Ca²⁺ ou Fe³⁺. De préférence, le sel de cation multivalent est sélectionné dans le groupe constitué par CaCl₂, Ca(NO₃)₂, FeCl₃, et leurs mélanges. La concentration en cation multivalent peut être comprise entre 0,001 M et 1 M, de préférence entre 0,01 M et 0,8 M, préférentiellement entre 0,02 M et 0,5 M, et plus préférentiellement entre 0,1 et 0,3M. Lorsque la suspension aqueuse comprenant (a) au moins un alginate et (b) des nématodes entomopathogènes entre en contact avec la solution de réticulation, des microsphères d'alginate se forment.

La suspension aqueuse peut comprendre une charge minérale et/ou une huile essentielle. La concentration en charge minérale et/ou une huile essentielle peut être comprise entre 0,01 et 10% en poids par rapport au poids total de la suspension aqueuse, préférentiellement entre 0,1 et 5% en poids, et plus préférentiellement entre 0,5 et 2,5% en poids. Parmi les charges minérales, on peut citer les micas, la silice, les argiles (comme le kaolin), la wollastonite, la vermiculite, le talc, le carbonate de calcium, éventuellement traité en surface par un acide organique ou par un ester d'un acide organique, l'argile calcinée, l'oxyde de titane, les oxydes de fer, de zinc, de chrome, de zirconium, de magnésium, les différentes formes d'alumine (hydratée ou non), le nitrure de bore, le lithopone, le métaborate de baryum, le sulfate de baryum et les microbilles de verre, le charbon, le charbon actif, le charbon végétal, pris seuls ou en mélanges.

Par « huile essentielle », on entend toute huile volatile extraite de plantes. Parmi les huiles essentielles, on peut citer l'huile essentielle de carotte, citron, citronnelle, orange, mandarine, pamplemousse, citron vert, cannelle, cèdre, clou de girofle, géranium, angélique, turméric, anis, cardamome , carvi, camomille , coriandre , bois de gaïac , cumin , aneth , persil, basilic , eucalyptus , fenouil , gingembre , bois de cèdre , jasmin , menthe, tubéreuse , néroli, patchouli, bois de santal, petit grain , laurier, vetivert , bergamote , baume du Pérou , bois de rose , origan , lavande , aiguille de pin , poivre , rose , iris , arbre à thé , graines de thé , thym , ail , menthe poivrée , oignon , onagre, sauge, romarin, et coriandre, prises seules ou en mélange.

La suspension peut également comprendre du glycérol, par exemple entre 5 et 30% en poids de glycérol, de préférence entre 10 et 20%.

Après encapsulation, des microsphères d'alginate comprenant des nématodes entomopathogènes sont obtenues. La taille des microsphères d'alginate obtenues peut être comprise entre 150 et 1000 µm, de préférence entre 200 à 900 µm, et préférentiellement entre 250 et 800 µm, ou entre 300 et 700 µm. La taille des microsphères obtenues dépend en partie de la taille des nématodes encapsulés. Grâce à l'électropulvérisation, il est possible d'obtenir des microsphères de petite taille. La taille des microsphères peut être déterminée par microscope optique.

Le nombre de nématodes par microsphère peut être compris entre 1 et 5000, par exemple entre 10 et 3000. De préférence, le nombre de nématodes par microsphère est compris entre 1 et 100, par exemple entre 1 et 20. Le nombre de nématodes par microsphère peut être déterminé par microscope optique.

La présente divulgation a également pour objet des microsphères d'alginate comprenant des nématodes entomopathogènes susceptibles d'être obtenues par le procédé de la présente divulgation.

La présente divulgation a également pour objet des microsphères d'alginate comprenant des nématodes entomopathogènes ayant une taille comprise entre 150 et 1000 µm, de préférence entre 200 à 900 µm, et préférentiellement entre 250 et 800 µm, ou entre 300 et 700 µm. Ces microsphères peuvent également comprendre une charge minérale et/ou une huile essentielle tels que décrits ci-dessus.

L'encapsulation par électropulvérisation n'a pas d'incidence sur les nématodes, les bactéries symbiotiques associées, et leur pouvoir pathogène, les microsphères obtenues peuvent ainsi être utilisées pour le biocontrôle. Les nématodes contenus dans les microsphères peuvent pénétrer dans les larves, probablement par ingestion ou à travers la cuticule. Ils engendrent alors une mortalité systématique des larves infectées après pénétration. La faible taille des microsphères permettrait aux larves de ravageurs de les consommer plus facilement, ce qui conduit à une meilleure efficacité en biocontrôle. Selon un mode de réalisation, les nématodes contenus dans les microsphères ont des propriétés insecticides suffisantes pour engendrer la mort aux insectes hôtes.

Les microsphères obtenues sont stables et peuvent être stockées pendant plusieurs semaines, voire plusieurs mois.

La présente divulgation a également pour objet l'utilisation de microsphères de la présente divulgation en biocontrôle, de préférence sur les nuisibles, et préférentiellement sur le taupin, sur le moustique tigre et/ou le carpocapse du pommier.

La présente divulgation a également pour objet un procédé de lutte contre les nuisibles comprenant l'application de microsphères de la présente divulgation à une zone sujette à une infestation de nuisibles.

Par "nuisible", on entend tout insecte nuisible, par exemple pour les plantes, en agriculture, pour les hommes et les animaux. Il peut s'agir par exemple de moustiques, comme le moustique tigre, de taupin, du légionnaire d'automne, ou du carpocapse de la pomme.

### Exemples

### Préparation d'une solution d'alginate de sodium

Dissoudre 1,5g d'alginate dans 100 ml d'eau milliQ pour obtenir une solution d'alginate à 1,5% en poids (Solution I).
Dans le cas d'une solution comprenant une huile essentielle, ajouter 10 µl d'huile essentielle et vortexer fortement jusqu'à obtenir une émulsion.
Dans le cas d'une solution comprenant une charge minérale, ajouter 1 g de poudre de mica
Dans le cas d'une solution comprenant duglycérol : 1,5 % Alginate de sodium et 18 % Glycérol, dans 90 mL de glycérol y dissoudre 7,5 g d'alginate de sodium Compléter pour atteindre les 500 mL avec de l'eau milliQ.

### Préparation d'une suspension de nématodes (Steinernema carpocapse)

Mesurer la concentration de la solution stock de nématodes par comptage sous loupe binoculaire pour prélever le volume contenant 90000 NEPs afin d'obtenir une concentration de 18000 NEP/mL dans la solution I.

Une fois le volume nécessaire déterminé, centrifuger 5 minutes à 2000 rpm afin de culotter les nématodes. Retirer le surnageant et suspendre dans 5 mL de solution I.

### Encapsulation

Pipeter le mélange alginate/NEPs dans une seringue de 5 ml et la positionner sur un système de pousse seringue raccordé à une tubulure par l'intermédiaire d'une aiguille 21G.

Projeter la suspension à l'aide d'un champ électrique ajustable de 5 kV à 26 kV dans une solution de réticulation de CaCl₂ à 0,2M avec un débit de 10 mL/h.

Récolter les microsphères sur un tamis ultrafin de maille inférieure à 200µm.

Observer sous loupe binoculaire pour vérifier la présence des NEPs à l'intérieur des microsphères. Les microsphères obtenues sont montrées en Figure 2 et ont un diamètre de 200 µm.

Les microsphères comprenant une huile essentielle ou une charge minérale conservent leur pouvoir infectieux, il n'y a pas de mortalité des NEPs au contact d'une huile essentielle ou d'une charge minérale.

### Bioessais

### Test sur Galleria melonella, fausse teigne de la ruche

96 larves de *G. melonella* sont isolées dans des tubes percés d'un trou et recouvert d'un papier imbibé d'eau et sur lequel sont déposés les inocula. Des infections avec 10 à 500 NEP sont testées (1 à 3 NEP/microsphère, soit entre 3 et 500 microsphères)
- Groupe 1 (T-) : 24 larves + 100µl de liquide de Ringer
   - Groupe 2 (T-) : 24 larves + bille d'alginate vide
   - Groupe 3 (T+) : 24 larves + NEP libres non formulés
   - Groupe 4 : 24 larves + NEP encapsulés

Les larves sont incubées à 23°C à l'obscurité et observées quotidiennement. Un relevé de mortalité est effectué toutes les 24h. Après 48h, les groupes 1 et 2 ne présente aucune mortalité des larves. Les groupes 3 et 4 présentent une mortalité des larves de 100%. Ces résultats montrent que l'encapsulation de NEPs selon le procédé de la présente divulgation n'a pas d'effet négatif sur l'efficacité des NEPs.

### Rétention des nématodes dans les billes et viabilité

Les NEPs encapsulés sont stockés selon différentes conditions de concentration en NEPs (1, ou 10 NEPs/bille), de températures (4°C, 8°C, et 25°C) et d'humidité (milieux liquides : eau ou CaCl2 0.2M ou milieu humide : boite de pétri avec papier wattman humidifié et parafilmé). Les billes sont observées quotidiennement sous une loupe binoculaire et des comptages sont fait pour estimer la sortie des nématodes mais également leur viabilité au sein de billes selon des critères de mobilité. Au bout de 15 jours, la viabilité des NEPs reste stable, ce qui indique une bonne stabilité au stockage.

### Essais comparatifs

Des microsphères de 2 mm obtenues selon la méthode décrite dans la demande de brevet WO2016/176764A1 et des microsphères de 200 µm obtenues selon le protocole ci-dessus sont utilisées dans le cadre de bioessais sur des larves de fausse teigne de la ruche, *Galleria melonella.* Les microsphères de 2 mm contiennent environ 100 nématodes et les microsphères de 200 µm entre 1 à 10 nématodes par bille.

Les larves de *G. melonella,* sont infectées selon les protocoles définis plus haut et avec les contrôles adéquats. Des infections à 100 NEP sont testées :
- Groupe 1 (T-) : 24 larves + 100µl de liquide de Ringer
- Groupe 2 (T-) : 24 larves + bille d'alginate vide 2 mm (1 bille)
- Groupe 3(T-) : 24 larves + billes d'alginate vide 200 µm (10 microbilles)
- Groupe 4 : 24 larves + NEP encapsulés par dripping
- Groupe 5 : 24 larves + NEP encapsulés par électro pulvérisation

Les larves sont incubées à 23°C à l'obscurité et observées quotidiennement. Un relevé de mortalité est effectué toutes les 24h. Les groupes 1, 2 et 3 ne présentent aucune mortalité. Une mortalité accrue est observée dans le groupe 5 comparée au groupe 4 (100 % de mortalité vs 80%) à la fin de l'expérimentation. Ces résultats montrent que les microsphères obtenues avec le procédé d'encapsulation de la présente divulgation sont plus efficaces que les microsphères obtenues selon les méthodes connues.

## Revendications

1. Procédé d'encapsulation de nématodes entomopathogènes par électropulvérisation comprenant une étape de projection d'une suspension aqueuse assistée d'un champ électrique dans une solution de réticulation, la suspension aqueuse comprenant (a) au moins un alginate et (b) des nématodes entomopathogènes.

2. Procédé selon la revendication 1, **caractérisé en ce que** l'alginate (a) est un l'alginate de sodium, ou un mélange comprenant de l'alginate de sodium.

3. Procédé selon l'une des revendications précédentes, **caractérisé en ce que** la concentration en (a) alginate dans la suspension aqueuse est comprise entre 0,1 à 5 %en poids, de préférence entre 0,5 et 3%.

4. Procédé selon l'une des revendications précédentes, **caractérisé en ce que** l'espèce de nématodes entomopathogènes est sélectionnée dans le groupe constitué par *:* : Steinernema boemarei, Steinernema feltiae, Steinernema glaseri, Steinernema kraussei, Steinernema carpocapsae, Steinernema scapterisci, Steinernema riobrave, Steinernema adamsi, Steinernema glaseri, Steinernema boemarei, Heterorhabditis bacteriophora, Heterorhabditis megidis, Heterorhabditis indica, Heterorhabditis heliothidis, Heterorhabiditis downesi Heterorhabditis marelatus, Phasmarhabditis hermaphrodita, Phasmarhabditis neopapillosa, Phasmarhabditis californica et leurs mélanges.

5. Procédé selon l'une des revendications précédentes, **caractérisé en ce que** la concentration en nématodes entomopathogènes dans la suspension aqueuse est comprise entre 100 et 30000 nématodes entomopathogènes/mL, de préférence entre 200 et 25000 nématodes entomopathogènes/mL, entre 500 et 20000 nématodes entomopathogènes/mL ou entre 1000 et 18000 nématodes entomopathogènes/mL.

6. Procédé selon l'une des revendications précédentes, **caractérisé en ce que** la solution de réticulation comprend au moins un sel de cation multivalent, de préférence sélectionné dans le groupe constitué par CaCl₂, Ca(NO₃)₂, FeCl₃, et leurs mélanges..

7. Procédé selon la revendication précédente, **caractérisé en ce que** la concentration en cation multivalent est comprise entre 0,001 M et 1 M, de préférence entre 0,01 M et 0,8 M, et plus préférentiellement entre 0,02 M et 0,5 M.

8. Procédé selon l'une des revendications précédentes, **caractérisé en ce que** la taille des microsphères d'alginate obtenues est comprise entre 150 et 1000 µm, de préférence entre 200 à 900 µm, et préférentiellement entre 250 et 800 µm.

9. Procédé selon l'une des revendications précédentes, **caractérisé en ce que** la suspension aqueuse comprend une charge minérale et/ou une huile essentielle.

10. Microsphères d'alginate comprenant des nématodes entomopathogènes susceptibles d'être obtenues par le procédé selon l'une des revendications précédentes.

11. Microsphères d'alginate comprenant des nématodes entomopathogènes ayant une taille comprise entre 150 et 1000 µm, de préférence entre 200 à 900 µm, et préférentiellement entre 250 et 800 µm.

12. Utilisation de microsphères d'alginate selon la revendication 10 ou 11 en biocontrôle, de préférence sur le taupin, le moustique tigre, et/ou le carpocapse du pommier.

13. Procédé de lutte contre les nuisibles comprenant l'application de microsphères d'alginate selon la revendication 10 ou 11 à une zone sujette à une infestation de nuisibles.
